# Europäisches Patentamt

(19) **European Patent Office**

**Office européen des brevets**

(11) Veröffentlichungsnummer: **0 182 016**
**B1**

(12) **EUROPÄISCHE PATENTSCHRIFT**

(45) Veröffentlichungstag der Patentschrift:
**03.05.89**

(51) Int. Cl.⁴: **B 62 D 25/08**

(21) Anmeldenummer: **85110635.1**

(22) Anmeldetag: **23.08.85**

(54) Verstärkte Trägerstruktur für einen Vorderwagen eines Kraftfahrzeuges.

(30) Priorität: **17.10.84 DE 3438012**

(43) Veröffentlichungstag der Anmeldung:
**28.05.86 Patentblatt 86/22**

(45) Bekanntmachung des Hinweises auf die Patenterteilung:
**03.05.89 Patentblatt 89/18**

(84) Benannte Vertragsstaaten:
**DE FR GB IT**

(56) Entgegenhaltungen:
**DE-A- 3 114 379**
**DE-B- 1 405 822**
**US-A- 2 841 439**

(73) Patentinhaber: **Dr.Ing.h.c. F. Porsche Aktiengesellschaft, Porschestrasse 42, D-7000 Stuttgart 40 (DE)**

(72) Erfinder: **Eger, Georg, Wilhelm-Busch-Strasse 23, D-7141 Hochdorf (DE)**

## Beschreibung

Die Erfindung bezieht sich auf eine verstärkte Trägerstruktur nach dem Oberbegriff des Anspruchs 1.

Bei einer bekannten Ausführung zur Anlenkung einer Radaufhängung (US-PS 2 841 439) ist außenseitig am Querträger einer Aufbaustruktur eines Kraftfahrzeugs ein Lagerbock vorgesehen. Dieser stützt sich an zwei winklig zueinander angeordneten Aufbauwänden ab, die einen steifen Eckverbund bilden. Eine derartige Abstützung ist nur dann möglich, wenn ein ausreichender Raum zur Verfügung steht und im Bereich der Anlenkungspunkte der Radführungslenker derart günstige Voraussetzungen vorliegen. Bei einem Fahrzeug, dessen Aufbaustruktur aber keinen derartigen steifen Eckverbund, gebildet durch Aufbauwände, aufweist und bei dem aufgrund einer Kühlluftöffnung in einer Radhausseitenwand im Bereich der Anlenkpunkte der Radaufhängung der Aufbau relativ weich ist, sind entsprechende Vorkehrungen am Aufbau zur optimalen Belastungsaufnahme zu treffen.

Aus der DE-OS 3 114 379 ist eine Aufbaustruktur eines Fahrzeugs bekannt, die im Bereich der den Innenraum begrenzenden Querwand Versteifungselemente wie Hohlträger aufweist, durch welche eine steife Fahrgastzelle erzielt wird, die keine störenden Torsions- und Biegespannungen zuläßt.

Aufgabe der Erfindung ist es, eine verstärkte Trägerstruktur im Bereich der Kühlluftöffnung zu schaffen, die sich ohne großen Bauaufwand leicht herstellen läßt, leichtgewichtig ist und auftretende horizontale und vertikale Belastungen funktionsgerecht aufnimmt und in das Radhaus sowie in die Längs- und Querträger formschlüßig derart einleitet, daß eine unveränderte Lage der Anlenkpunkte gewährleistet ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß ein weicher Bereich des Aufbaus durch einfache Mittel in der Weise verstärkt wird, daß sich ein relativ steifer Verbund zur Anlenkung eines Radführungsgliedes ergibt. Der Verbund ist so ausgeführt, daß ein Kraftfluß in die Wände, den Aufbau sowie in die Träger erfolgt, so daß die vom Rad kommenden Kräfte gut aufgenommen werden können. Vorteilig ist auch, daß die Verstärkungseinheit in das Tragsystem integriert ist, wodurch vorstehende Teile, Lagerböcke und dergleichen vermieden werden und die Lagerpunkte der Radaufhängung in die Aufbaustruktur eingebettet sind, so daß die Kräfte ohne eine wesentliche Momentbildung unmittelbar in den Aufbau eingeleitet werden können.

Ein Ausführungsbeispiel der Erfindung ist in der Zeichnung dargestellt und wird im folgenden näher beschrieben.

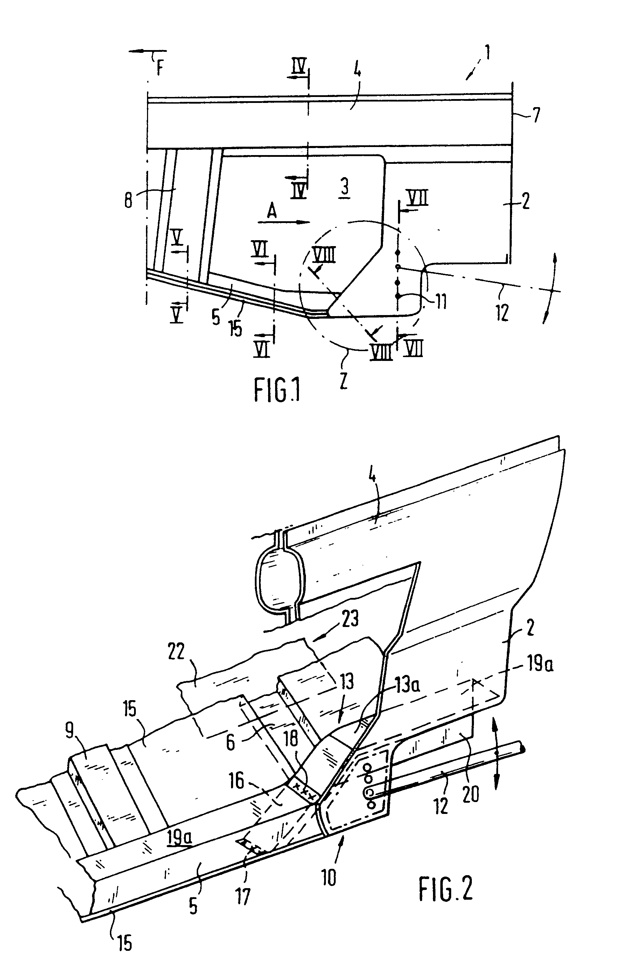

Es zeigt Fig. 1 eine schematische Teilvorderansicht von einem Vorderwagen eines Kraftfahrzeugs,

Fig. 2 eine schaubildliche Ansicht des Vorderwagens in Pfeilrichtung A der Fig. 1 gesehen,

Fig. 3 eine vergrößerte Darstellung der Einzelheit Z gemäß Fig. 1 im Schnitt nach der Linie III–III der Fig. 9,

Fig. 4 einen Schnitt nach der Linie IV–IV durch einen oberen Längsträger nach Fig. 1,

Fig. 5 einen Schnitt nach der Linie V–V durch einen unteren Längsträger nach Fig. 1,

Fig. 6 einen Schnitt nach der Linie VI–VI durch den unteren Längsträger im Bereich der Kühlluftöffnung nach Fig. 1,

Fig. 7 einen Schnitt nach der Linie VII–VII durch den Lagerbock mit Verstärkungsteil nach Fig. 1,

Fig. 8 einen Schnitt nach der Linie VIII–VIII im Bereich der Verbindungsstelle unterer Längsträger–Lagerbock nach Fig. 1, und

Fig. 9 einen Schnitt durch den Lagerbock und die Verstärkungseinheit.

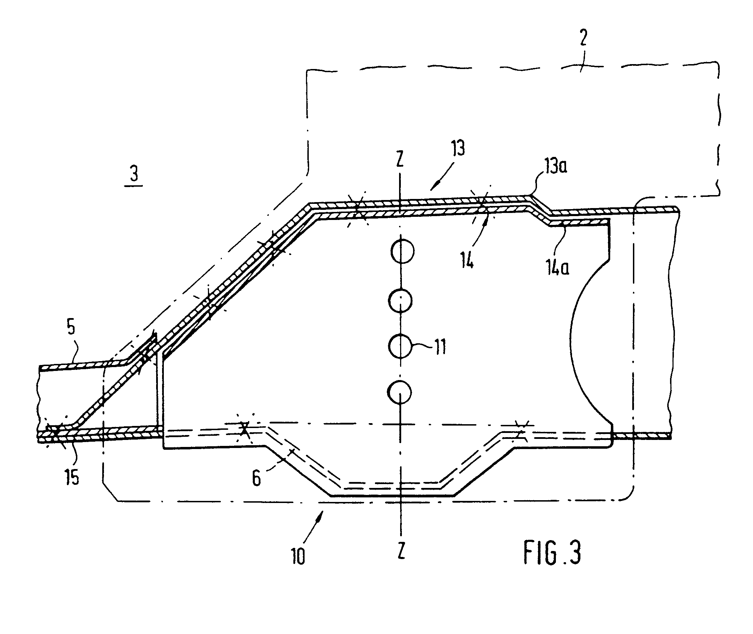

In Fig. 1 ist ein Teil eines Vorderwagens 1 dargestellt, der jeweils in einer Seitenwand 2 eine Kühlluftöffnung 3 aufweist. Diese ist begrenzt von einem oberen Längsträger 4 und einem unteren Längsträger 5, die in Verbindung mit einem Querträger 6 (Fig. 3) sowie einer Querwand 7 und einem vertikalen Träger 8 sowie einem weiteren Querträger 9 ein Rahmensystem bilden. In diesem Rahmensystem ist eine Verstärkungseinheit 10 integriert, die als Aufnahme (Bohrung 11) für ein Radführungsglied 12 ausgebildet ist.

Die Verstärkungseinheit 10 ist im unteren Eckbereich der Kühlluftöffnung 3 am hinteren Ende des unteren Längsträgers 5 vorgesehen. Sie umfaßt einen Lagerbock 13, in dem ein eingepaßtes Verstärkungsteil 14 gehalten ist. Mit dem Lagerbock 13 ist der Querträger 6 verbunden, der Teil eines Bodenabschlußbleches 15 ist und welches an der Querwand 7 des Aufbaus 1 gehalten wird.

Der Lagerbock 13 und das innenliegende Verstärkungsteil 14 sind vorzugsweise U-profilförmig ausgeführt und zur Aufnahme des sich schwenkenden Lenkerarmes 12 – in bezug auf die Fahrtrichtung F – nach hinten hin offen ausgeführt.

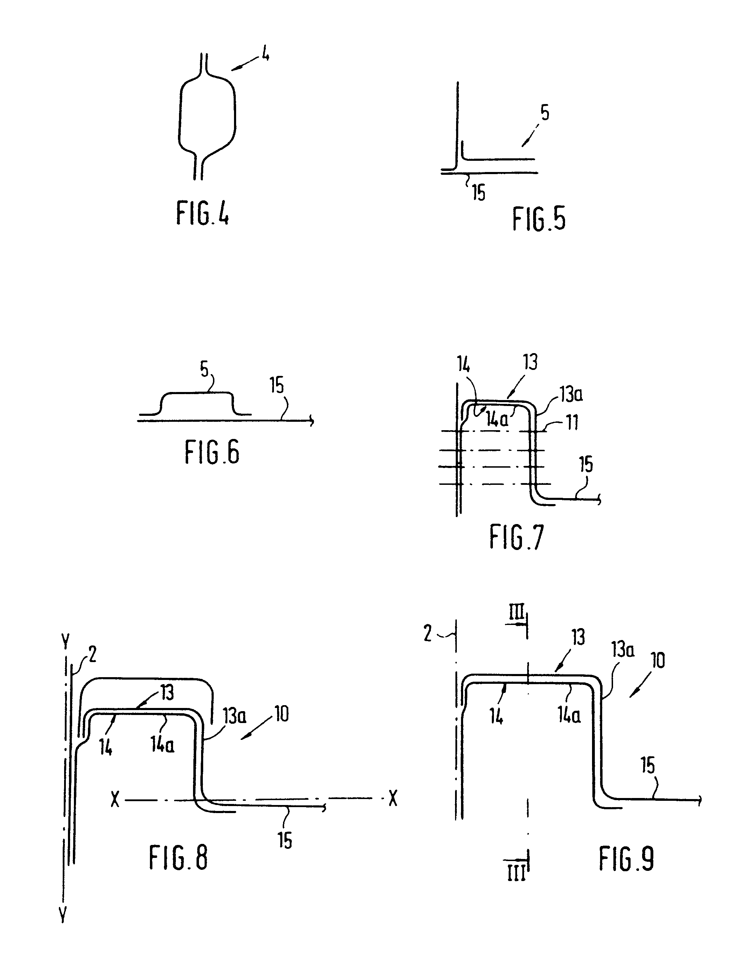

Der Lagerbock 13 ist in Verlängerung des Längsträgers 5 vorgesehen, ragt nach oben über seine horizontale Ebene hinaus und bildet ein äußeres Trägerstück 13a. Dieses ist in einer horizontalen Ebene X–X mit dem Bodenabschlußblech verbunden und bildet mit diesem ein Teil. In einer vertikalen Ebene Y–Y ist das äußere Trägerstück 13a mit der Radhauswand 2 verbunden (Fig. 8).

Der Lagerbock 13 ist – in Seitenansicht gesehen – etwa dreieckförmig ausgeführt und bildet ein zur Fahrzeugaußenseite hin offenes Profil. Mit seinem einen, in Fahrzeuglängsrichtung schräg nach vorne verlaufenden Schenkel 16 (Fig. 3) ist der Lagerbock 13 unter dem Längsträger 5 weitergeführt und wird endseitig mit dem Bodenabschlußblech 15 (bei 17) verbunden, wobei eine weitere Verbindung 18 mit dem Steg 19 des Längsträgers 5 erfolgt. Der zur anderen Seite gerichtete, horizontal verlaufende weitere Schenkel 19a ist mit der Radhauswand 2 verbunden, die das Profil auch nach außen hin abschließt, wie Fig. 2 und 9 näher zeigen.

Die senkrechte innere Wand 20 des Lagerbocks 13 erstreckt sich in Längsrichtung bis zur Querwand 7 und ist mit dieser fest verbunden.

Im Lagerbock 13 ist das Verstärkungsteil 14 durch Schweißpunkte befestigt. Es ist vorzugsweise als U-Profil ausgeführt und wird mit der Seitenwand 2 verbunden und bildet ein zweites inneres Trägerstück 14a.

Der Lagerbock 13 ist vorzugsweise in der Weise angeordnet, daß er etwa in der senkrechten Längsmittenebene Z–Z des Querträgers 6 zu liegen kommt. Die Aufnahmebohrungen 11 für das Radführungsglied 12 sind unmittelbar in dieser senkrechten Ebene Z–Z vorgesehen.

## Patentansprüche

1. Verstärkte Trägerstruktur für einen Vorderwagen (1) eines Kraftfahrzeugs, der in einer Radhauswand des Fahrzeugaufbaus eine Kühlluftöffnung (3) aufweist, welche von einem oberen und einem unteren Längsträger (4, 5) begrenzt wird, die mit einem Boden (15), einer Querwand (7) sowie einem vorderen Querträger (9) verbunden sind und ein räumliches Rahmensystem bilden, an dem ein Radführungsglied (12) abgestützt gehalten wird, dadurch gekennzeichnet, daß der untere Längsträger (5) des Bodens (15) im Eckbereich der Kühlluftöffnung (3) durch eine verbundene Verstärkungseinheit (10) ergänzt wird, die ein als Querträger (6) ausgebildetes Teil des Bodenabschlußblechs (15) aufweist und an die Querwand (7) und an die Radhauswand (2) anschließt und zu einer Baueinheit zusammengefaßte Trägerstücke (13a, 14a) umfaßt, die eine U-profilförmige steife Lenkeraufnahme bilden.

2. Trägerstruktur nach Anspruch 1, dadurch gekennzeichnet, daß in Verlängerung des unteren Längsträgers (5) im Bereich des Querträgers (6) ein hochragender Lagerbock (13) gehalten ist, der in einer horizontalen Ebene (X–X) mit dem Bodenabschlußblech und in einer vertikalen Ebene (Y–Y) mit der Radhauswand (2) verbunden ist und ein äußeres Teil der Lenkeraufnahme bildet.

3. Trägerstuktur nach Anspruch 1, dadurch gekennzeichnet, daß der Lagerbock (13) – in Seitenansicht gesehen – etwa dreieckförmig ausgeführt ist und ein zur Fahrzeugaußenseite hin offenes Profil bildet, das mit seinem einen, in Fahrzeuglängsrichtung schräg nach vorne verlaufenden Schenkel (16) unter den Längsträger (5) geführt und endseitig mit dem Bodenabschlußblech (15) sowie mit einem Steg (16) des Längsträgers (5) verbunden ist, wobei der weitere abgekehrte und horizontal verlaufende Schenkel (19a) an der Querwand (2) abgestützt gehalten wird.

4. Trägerstruktur nach Anspruch 3, dadurch gekennzeichnet, daß der Lagerbock (13) nach außen hin von der bis zum Längsträger (5) heruntergezogenen Radhauswand (2) abgeschlossen ist und das Trägerstück (13a) bildet.

5. Trägerstruktur nach den Ansprüchen 3 oder 4, dadurch gekennzeichnet, daß in dem Lagerbock (13) ein U-profilförmiges Verstärkungsteil (14) als weiteres Trägerstück (14a) eingepasst angeordnet ist, das ein inneres Teil der Lenkeraufnahme bildet und mit dem Lagerbock (13), der Radhauswand (2) und dem Bodenabschlußblech (15) verbunden ist.

6. Trägerstruktur nach einem oder mehreren der vorhergehenden Ansprüche, dadurch gekennzeichnet, daß der im Querschnitt U-profilförmig ausgebildete Querträger (6) des Bodenabschlußblechs (15) über ein Deckblech (22) abgeschlossen ist und einen Hohlträger (23) bildet.

7. Trägerstruktur nach einem oder mehreren der vorhergehenden Ansprüche, dadurch gekennzeichnet, daß etwa in der senkrechten Längsmittenebene (Z–Z) des Querträgers (6) der Lagerbock (13) mit dem Verstärkungsteil (14) sowie übereinander angeordneten Aufnahmebohrungen (11) für den Lenkerarm (12) vorgesehen sind.

## Claims

1. Reinforced supporting structure for a front part (1) of a motor vehicle which has in a wheel housing wall of the vehicle body a cool-air opening (3) which is delimited by an upper and a lower longitudinal support (4, 5) which are connected to a base (15), a transverse wall (7) and a front transverse support (9) and form a spatial framework system against which a wheel steering element (12) is held supported, characterised in that the lower longitudinal support (5) of the base (15) in the corner region of the cool-air opening (3) is supplemented by a connected reinforcing unit (10) which has a part of the base closure plate (15) constructed as a transverse support (6), is connected to the transverse wall (7) and to the wheel housing wall (2), and comprises support parts (13a; 14a) placed together to form a structural unit and forming a rigid steering receiver of a U-shaped profile.

2. Supporting structure according to claim 1, characterised in that there is held in an extension of the lower longitudinal support (5) in the region of the transverse support (6) an upwardly projecting bearing block (13) which is connected along a horizontal plane (X–X) to the base closure plate and along a vertical plane (Y–Y) to the wheel housing wall (2) and forms an outer part of the steering receiver.

3. Supporting structure according to claim 1, characterised in that the bearing block (13), as seen in side view, is constructed to be approximately triangular and forms a profile which is open to the outside of the vehicle and which is guided below the longitudinal support (5) with its leg (16) extending obliquely forward, in the longitudinal direction of the vehicle, and is connected at its end to the base closure plate (15) and to a web (16) of the longitudinal support (5), the further leg (19a) facing away and extending horizontally being held supported against the transverse wall (2).

4. Supporting structure according to claim 3, characterised in that the bearing block (13) is closed off to the outside by the wheel housing wall (2) extending down as far as the longitudinal support (5) and forms the support part (13a).

5. Supporting structure according to claims 3 or 4, characterised in that a reinforcing part (14) having a U-shaped profile is arranged fitting in the bearing block (13) as a further supporting part (14a) which forms an inner part of the steering receiver and is connected to the bearing block (13), the wheel housing wall (2) and the base closure plate (15).

6. Supporting structure according to one or more of the preceding claims, characterised in that the U-cross section transverse support (6) of the base closure plate (15) is closed off by a cover plate (22) and forms a hollow support (23).

7. Supporting structure according to one or more of the preceding claims, characterised in that provided approximately in the perpendicular longitudinal central plane (Z–Z) of the transverse support (6) are the bearing block (13) with the reinforcing part (14) and receiving bores (11) arranged one above the other for the steering arm (12).

**Revendications**

1. Structure de longeron renforcée pour une partie avant (1) d'un véhicule à moteur, qui comporte dans une paroi de logement de roue de la carrosserie du véhicule une ouverture d'air de refroidissement (3), qui est délimitée par un longeron supérieur (4) et un longeron inférieur (5), qui sont reliés à fond (15), une paroi transversale (7), ainsi qu'une entretoise transversale antérieure (9) et forment un système de châssis géométrique, sur lequel est retenu en appui un organe de guidage de roue (12), caractérisée en ce que le longeron inférieur (5) du fond (15) est complété dans la zone d'angle de l'ouverture d'air de refroidissement (3) par une unité de renforcement reliée (10), qui comporte une partie, réalisée sous la forme d'entretoise transversale (6), de la plaque de fermeture inférieure métallique (15) et se raccorde à la paroi transversale (7) et à la paroi de logement de roue (2) et comprend des sections de support (13a, 14a) rassemblées en une unité modulaire qui constituent un logement de bras oscillants rigides de profil en U.

2. Structure selon la revendication 1, caractérisée en ce qu'il est retenu dans le prolongement du longeron inférieur (5) dans la zone de l'entretoise transversale (6) un support (13) dépassant vers le haut, qui est relié dans un plan horizontal (X–X) à la plaque de fermeture inférieure métallique et dans un plan vertical (Y–Y) à la paroi de logement de roue (2) et constitue une partie extérieure du logement de bras oscillant.

3. Structure selon la revendication 1, caractérisée en ce que le support (13) est réalisé sous une forme sensiblement triangulaire (en vue latérale) et constitue un profil ouvert vers l'extérieur du véhicule, qui s'étend par l'une de ses branches (16) dirigées obliquement vers l'avant, dans la direction longitudinale du véhicule, sous le longeron (5) et est relié à l'extrémité à la plaque de fermeture inférieure métallique (15), ainsi qu'à un dos (16) du longeron (5), l'autre branche opposée et dirigée horizontalement (19a) étant maintenue en appui sur la paroi transversale (2).

4. Structure selon la revendication 3, caractérisée en ce que le support (13) est fermé vers l'extérieur par la paroi de logement de roue (2) descendant jusqu'au longeron (5) et forme la section de support (13a).

5. Structure selon la revendication 3 ou 4, caractérisée en ce qu'il est placé dans le support (13) un élément de renforcement de profil en U (14) constituant une autre section de support (14a), qui constitue une partie intérieure de logement de bras oscillants et est relié au support (13), à la paroi de logement de roue (2) et à la plaque de fermeture inférieure métallique (15).

6. Structure selon une ou plusieurs des revendications précédentes, caractérisée en ce que l'entretoise transversale (6), de profil en U en section droite, de la plaque de fermeture inférieure métallique (15) est fermée au moyen d'une plaque de recouvrement métallique (22) et forme une poutre creuse (23).

7. Structure selon une ou plusieurs des revendications précédentes, caractérisée en ce qu'on prévoit, à peu près dans le plan de symétrie longitudinale vertical (Z–Z) de l'entretoise transversale (6), le support (13) avec l'élément de renforcement (14), ainsi que des alésages de réception superposés (11) pour le bras oscillant (12).

FIG.1

FIG.2

FIG.3

FIG.4

FIG.5

FIG.6

FIG.7

FIG.8

FIG.9